# FASCICULE DE BREVET EUROPEEN

(11) **EP 0 628 447 B1**
(45) Date de publication et mention de la délivrance du brevet: **28.01.1998**
(21) Numéro de dépôt: 94401129.5
(22) Date de dépôt: 20.05.1994
(51) Int. Cl.: B60N 2/24, B60N 2/22, B64D 11/06

(54) **Dispositif d'articulation pour siège de véhicule**
Gelenkbeschlag für Fahrzeugsitz
Articulation device for vehicle seat

(30) Priorité: 09.06.1993 FR 9306932
(43) Date de publication de la demande: 14.12.1994
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert, F-750016 Paris (FR)
(74) Mandataire: Derambure, Christian

(56) Documents cités:
- EP-A- 0 112 170
- DE-A- 3 322 511
- DE-A- 3 539 258
- US-A- 4 431 231

## Description

L'invention concerne un dispositif d'articulation pour sièges d'appareil de transport en commun - notamment d'avions de ligne - et une structure de siège comportant un tel dispositif.

Plus précisément ce dispositif d'articulation est destiné à permettre le basculement du dossier du siège par rapport à l'assise du siège autour d'un axe de basculement. En général, le dossier a une forme générale en "U" dont l'âme forme le haut du dossier et les ailes forment les chants latéraux du dossier.

L'assise comporte une partie arrière comportant deux extrémités libres arrières. L'axe de basculement est horizontal et passe par les extrémités libres arrières de l'assise et les extrémités libres des chants latéraux du dossier. Chaque extrémité libre des chants latéraux du dossier est articulée à une extrémité libre arrière de l'assise par des moyens d'articulation de façon à pouvoir pivoter autour de l'axe de basculement.

En outre, le siège comporte en général un organe de commande et de maintien en position du dossier. Cet organe est généralement associé rigidement à l'assise et coopère via une biellette appropriée avec le dossier pour permettre le réglage de la position du dossier et son maintien en position. De façon générale, le dossier peut se positionner dans trois positions de service à savoir : une position verticale dite position assise, une position inclinée vers l'arrière dite position couchée et une position inclinée vers l'avant dite position "break-over". Les deux premières positions sont des positions de service usuelles, la troisième position est une position exceptionnelle, d'accident ou de stockage.

On connaît déjà des moyens d'articulation destinés à permettre le basculement du dossier par rapport à l'assise.

Le document EP-A-112 170 décrit un siège de véhicule avec un montage à relâchement rapide d'une tablette de dossier de siège.

Il en va sensiblement de même du document DE-A-35 39 258.

Ces documents prévoient des pions de cadre ayant chacun une extrémité cylindrique avec une paire de méplats opposés.

Des moyens d'articulation sont souvent constitués de nombreuses pièces, dont la principale est un élément d'axe s'étendant sur une partie substantielle du segment d'axe de basculement compris entre l'extrémité libre du dossier et l'extrémité libre arrière de l'assise. Cet élément d'axe est associé rigidement et solidaire de l'assise. L'extrémité du chant latéral du dossier est associée libre en rotation autour de l'élément d'axe.

Généralement cet élément d'axe solidaire de l'assise sert d'axe de rotation à une pièce mécanique supportant une tablette passager destinée au passager assis dans le prolongement et derrière le siège.

La biellette de l'organe de commande et de maintien en position du dossier doit être solidaire du dossier. De ce fait, elle est directement solidarisée au chant latéral du dossier. La disposition de la biellette directement au contact du chant latéral du dossier impose d'éloigner sensiblement l'organe de commande des pièces constitutives de l'assise.

De ce fait, un premier inconvénient de ce type de moyens provient de la nécessité d'avoir des éléments raidisseurs supplémentaires nécessaires au maintien convenable de l'organe de commande sur l'assise. Les documents EP-A-385 861 ou FR-A-2 643 870 illustrent clairement cet inconvénient.

Un autre inconvénient relatif au moyen décrit ci-dessus provient des multiples pièces constitutives de tels moyens générant des temps de montage et démontage du dossier de l'assise importants. Cela est un inconvénient important si l'on considère que tout gain de temps dans le procédures de maintenance des appareils de transport aérien a des répercussions importantes sur les coûts effectifs de l'appareil. Le montage-démontage d'un dossier associé à l'assise à l'aide des moyens décrits ci-dessus est d'autant plus compliqué qu'il nécessite au préalable le démontage de la tablette, celle-ci ne pouvant être démontée en même temps que le dossier.

Le but de la présente invention est de pallier les inconvénients présentés plus haut en proposant un dispositif d'articulation pour siège d'appareil de transport en commun - notamment d'avion de ligne - comportant un nombre minimal de pièces constitutives, permettant le montage du dossier et de la tablette sans outils, et rapprochant sensiblement la biellette d'actionnement de l'organe de commande de l'assise de telle sorte qu'aucun raidisseur supplémentaire n'est nécessaire.

A cet effet, l'invention telle que définie dans la revendication indépendante 1 concerne un dispositif d'articulation pour siège d'appareil de transport en commun - notamment d'avion de ligne - destiné à permettre le basculement du dossier du siège par rapport à l'assise du siège autour d'un axe de basculement. Le dossier a une forme générale en "U" dont l'âme forme le haut du dossier et les ailes forment les chants latéraux du dossier. L'assise a une partie arrière comportant deux extrémités libres arrières. L'axe de basculement est horizontal et passe par les extrémités libres arrière de l'assise et les extrémités libres des chants latéraux du dossier.

Selon l'invention, le dispositif d'articulation comporte au moins à une extrémité libre du dossier un élément de tourillon associé rigidement et solidaire du dossier, en saillie à l'extérieur du dossier et dans le prolongement de l'axe de basculement. L'extrémité libre arrière en regard de l'élément de tourillon comporte un support de tourillon associé rigidement et solidaire de la partie arrière de l'assise, en saillie à l'intérieur de l'assise et dans le prolongement de l'axe de basculement. L'élément de tourillon et le support de tourillon ont des moyens d'association respectifs pour réaliser une association amovible et sécurisée de l'un sur l'autre et pour permettre la rotation de l'élément de tourillon autour de l'axe de basculement.

Une des caractéristiques de l'élément de tourillon consiste en ce qu'il s'étend axialement sur une partie substantielle du segment de l'axe de basculement compris entre l'extrémité libre du dossier et l'extrémité libre arrière de l'assise.

L'invention concerne également une structure de siège d'appareil de transport aérien en commun - notamment d'avion de ligne - constituée d'un piètement, d'une assise, et d'un dossier inclinable autour d'un axe de basculement. Cette structure comporte au moins un dispositif d'articulation selon l'invention.

La structure comporte en outre un organe de commande et de maintien en position du dossier. Cet organe est associé rigidement à l'assise et coopère via une biellette appropriée avec le dossier pour permettre le réglage de la position du dossier et son maintien en position.

La structure comporte enfin un dispositif de tablette passager escamotable destiné à être utilisé par le passager assis dans le prolongement et derrière ladite structure. Selon l'invention, cette structure comporte des dispositifs d'articulation selon l'invention.

L'un des avantages de la présente invention consiste dans la possibilité de pouvoir monter-démonter rapidement et sans outils le dossier de l'assise.

Un autre avantage consiste à pouvoir équiper totalement un dossier de ses habillages (mousse, housse) et tablette dorsale dans un atelier et d'interchanger en quelques secondes un dossier de siège sur avion. Actuellement, il faut déshabiller le dossier pour avoir accès à la boulonnerie pour assemblage/désassemblage.

Cela a pour effet une diminution des temps de maintenance et donc un gain de productivité pour l'appareil ainsi équipé.

Un autre avantage de la présente invention est de pouvoir monter-démonter le dispositif de tablette passager soit indépendamment du dossier, soit conjointement au dossier.

Un autre avantage de la présente invention, du fait de l'élément de tourillon, est de pouvoir rapprocher sensiblement la biellette d'activation et les moyens de commande de l'assise de telle sorte qu'aucun raidisseur supplémentaire n'est nécessaire.

D'autres caractéristiques de l'invention résulteront dans la description qui va suivre en référence aux figures annexées dans lesquelles :

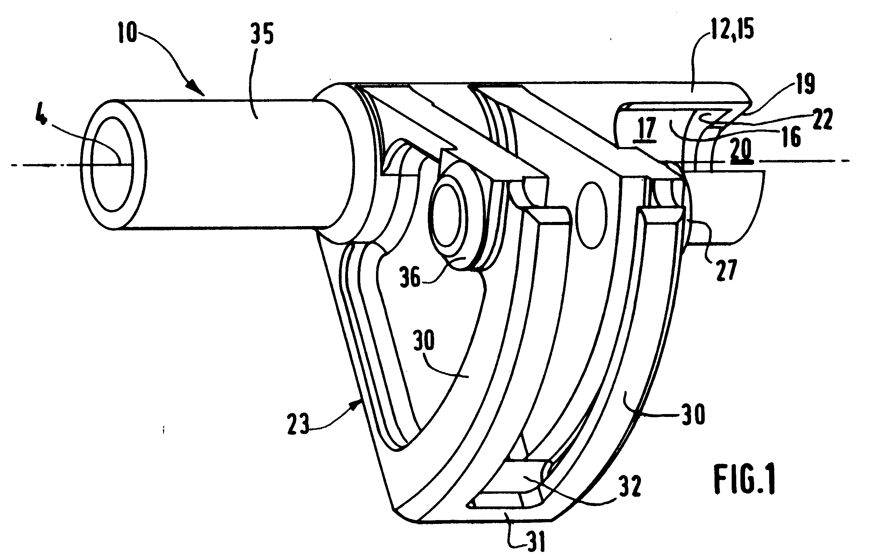

- la figure 1 est une représentation schématique en perspective de l'élément de tourillon d'un dispositif d'articulation selon l'invention.

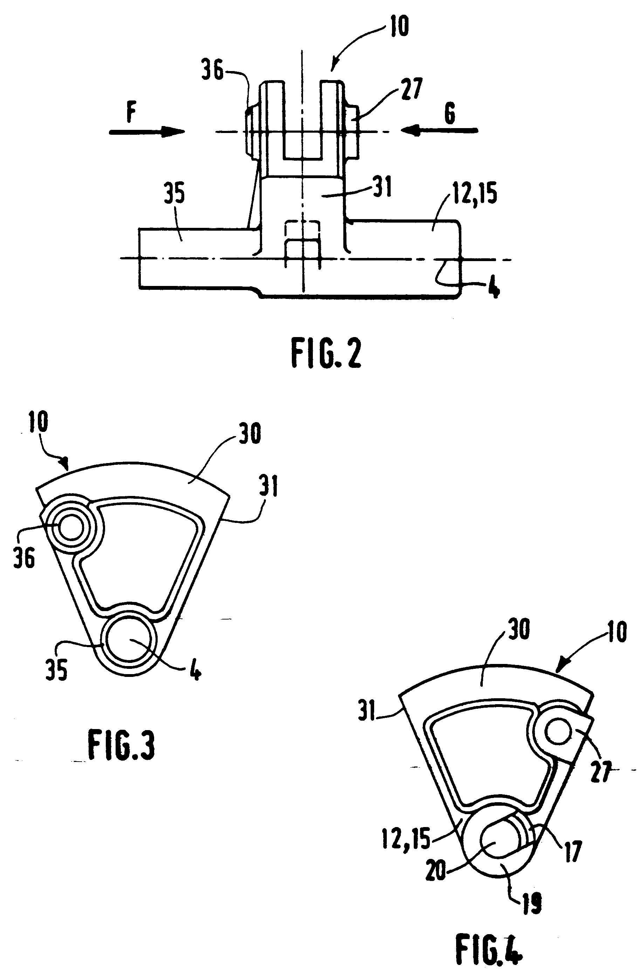

- la figure 2 est une représentation schématique de face de l'élément de tourillon représenté sur la figure 1.
- la figure 3 est une représentation schématique de l'élément de tourillon représenté sur la figure 2 vu suivant la flèche F.
- la figure 4 est une représentation schématique de l'élément de tourillon représenté sur la figure 2 vu suivant la flèche G.
- les vues 5a à 5d sont des vues partielles schématiques en section droite transversale d'un élément de tourillon et du support de tourillon d'un dispositif d'articulation selon l'invention, respectivement dans la position d'association, dans la position "break-over", dans la position assise, et dans la position couchée du dossier.

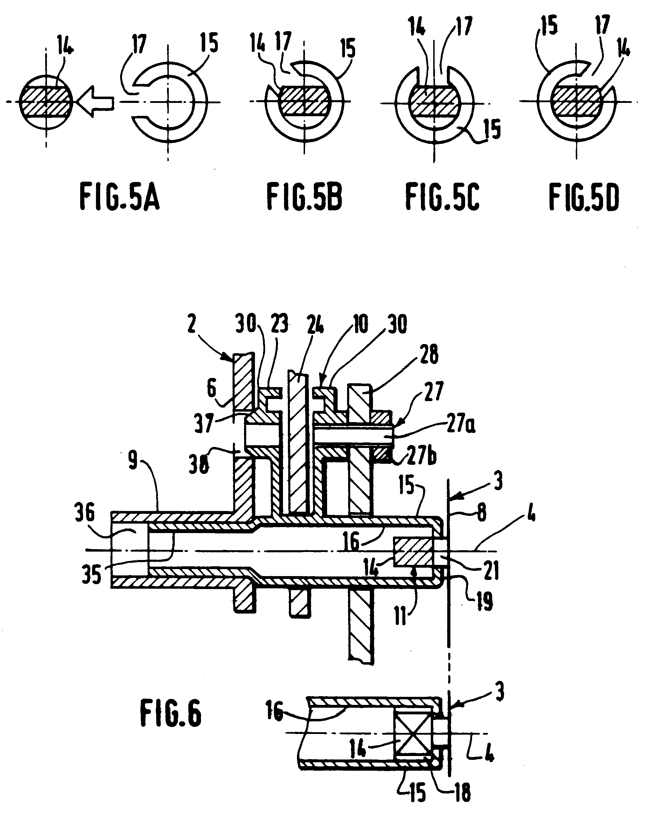

- la figure 6 est une représentation schématique en coupe axiale du dispositif d'articulation selon l'invention.

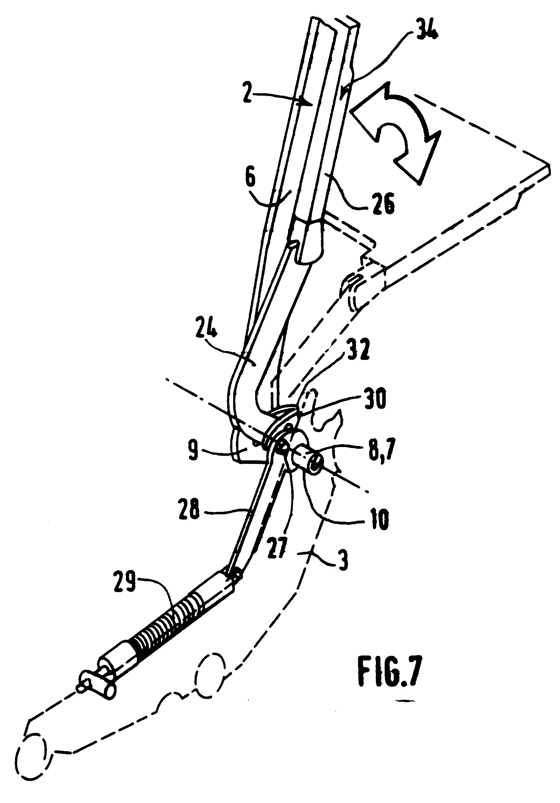

- la figure 7 est une représentation schématique partielle en perspective d'une structure de siège selon l'invention.

Le dispositif d'articulation 1 pour siège d'appareil de transport en commun - notamment d'avion de ligne - est destiné à être intercalé entre une assise 3 et un dossier 2 dudit siège. Ce dispositif d'articulation a pour but de permettre le basculement du dossier 2 par rapport à l'assise 3 du siège autour d'un axe de basculement 4.

Le dossier 2 a une forme générale connue en U dont l'âme forme le haut du dossier et les ailes forment les chants latéraux 6 du dossier 2.

L'assise 3 comporte aussi de façon connue une partie arrière 7 comportant deux extrémités libres arrières 8.

De manière tout aussi connue, l'axe de basculement 4 est horizontal en position de service du siège, et passe par les extrémités libres arrières 8 de l'assise 3 et les extrémités libres 9 des chants latéraux 6 du dossier 2.

Au moins une des extrémités libres 9 des chants latéraux 10 du dossier 2 comporte un élément de tourillon 10 associé rigidement et solidaire du dossier 2. Cet élément de tourillon 10 est en saillie vers l'extérieur du dossier 2. L'élément de tourillon 10 est positionné dans le prolongement de l'axe de basculement 4. L'extrémité libre arrière 8 en regard de l'élément de tourillon 10 comporte un support de tourillon 11 associé rigidement et solidaire de la partie arrière 7 de l'assise 3. Ce support de tourillon 11 est en saillie vers l'intérieur de l'assise 3 et dans le prolongement de l'axe de basculement 4. L'élément de tourillon 10 et le support de tourillon 11 ont des moyens d'association respectifs 12, 13 l'un sur l'autre réalisant une association amovible et sécurisée et permettant la rotation de l'élément de tourillon 10 autour de l'axe de basculement 4. Selon l'invention, l'élément de tourillon 10, solidaire du dossier, s'étend axialement sur une partie substantielle du segment d'axe de basculement 4 compris entre l'extrémité libre 9 du dossier 2 et l'extrémité libre arrière 8 de l'assise 3. Cette caractéristique a pour effet que la partie utile du segment d'axe est solidaire du dossier.

De ce fait, lors du montage-démontage du dossier, toutes les pièces associées à l'élément de tourillon 10 sont montables-démontables avec le dossier.

Selon des caractéristiques additionnelles de l'invention, le dispositif d'articulation comprend un élément de tourillon 10 à chaque extrémité libre 9 des chants 6 et un support de tourillon 11 à chaque extrémité libre arrière 8 de l'assise 3.

Selon d'autres caractéristiques de l'invention, le dispositif d'articulation présente une position d'association dans laquelle l'élément de tourillon 10 et le support de tourillon 11 sont associés sans outils (figure 5a) et au moins une position de service dans laquelle l'association de l'élément de tourillon 10 et du support de tourillon 11 est sécurisée (figure 5b, 5c, 5d).

Dans la description qui va suivre, les qualificatifs "radial", "longitudinal", "transversal" sont utilisés en référence à l'axe de basculement 4.

Dans un mode de réalisation particulier de l'invention, dans la position d'association, l'élément de tourillon 10 est libre en translation par rapport au support de tourillon 11 dans une direction d'association radiale à l'axe de basculement 4. Dans les positions de service sécurisées, l'élément de tourillon 10 est bloqué dans toutes les directions radiales à l'axe de basculement 4.

De ce fait, dans la position d'association, qui correspond à la position de montage-démontage du dossier de l'assise, le montage-démontage du dossier s'effectue par un mouvement en translation dans la direction d'association.

Dans le mode de réalisation représenté et selon l'invention, les moyens d'association 12 du support de tourillon 11 comprennent un méplat 14 s'étendant du côté opposé à l'assise 3 dans un plan radial à l'axe de basculement 4. Le méplat 14 s'étend de part et d'autre de l'axe de basculement 4 de telle sorte que sa médiane soit confondue avec l'axe de basculement.

Les moyens d'association de l'élément de tourillon 10 comprennent un élément tubulaire 15 de l'élément de tourillon 10 à paroi interne 16 cylindrique de révolution de même axe que l'axe de basculement 4. L'élément tubulaire 15 présente du côté opposé au dossier une fente longitudinale 17 s'étendant suivant une génératrice de la paroi interne 16 cylindrique. Le méplat 14 a une longueur radiale sensiblement égale au diamètre intérieur de l'élément tubulaire 15 et une épaisseur inférieure à l'épaisseur de la fente longitudinale 17.

Dans la position d'association, le plan radial virtuel passant par la fente longitudinale 17 est confondu avec le plan radial du méplat 14. Le méplat 14 est disposé à l'intérieur de l'élément tubulaire 15 et en regard de la fente longitudinale 17.

De ce fait, un mouvement en translation suivant une direction radiale et comprise dans le plan radial du méplat 14 entraîne la séparation des moyens d'association de l'élément de tourillon 10 et du support de tourillon 11. Cela entraîne le démontage du dossier par rapport à l'assise.

De même pour associer ou monter le dossier sur l'assise, il convient de faire correspondre le plan radial virtuel passant par la fente avec le plan radial du méplat puis d'amener en butée, par un mouvement en translation, à travers la fente longitudinale, la paroi interne cylindrique 16 au contact d'un bord distal 18 du méplat. On passe de la position d'association à une position de service sécurisée en faisant basculer le dossier 2 autour de l'axe de basculement 4 de telle manière que le plan radial virtuel passant par la fente est différent du plan radial du méplat 14, les bords distaux 18 du méplat 14 coopérant avec la paroi interne 16 de l'élément tubulaire 15.

Dans le mode de réalisation préféré de l'invention, l'extrémité de l'élément tubulaire 15 présente avantageusement une base fermée ayant une fente radiale 20 venant dans le prolongement de la fente longitudinale 17. Cette fente radiale 20 permet le passage d'un élément de tige cylindrique 21 de même axe que l'axe de basculement 4, intercalée entre l'assise 3 et le méplat 14. Le diamètre de cet élément de tige est inférieur à la longueur radiale du méplat. De ce fait, le méplat 14 coopère avec la face interne 22 de la base 19 pour bloquer en translation suivant l'axe de basculement 4 le dossier 2 par rapport à l'assise 3 au moins dans le sens tendant à écarter le chants 6 du dossier 2 de l'assise 3.

En variante, l'élément tubulaire 15 pourrait être porté par le support de tourillon 11 et le méplat 14 par l'élément de tourillon 10 sans sortir du cadre de l'invention.

Dans le mode de réalisation préféré de l'invention, l'élément de tourillon 10 et ses moyens d'association 12 sont une pièce monobloc. Cette pièce peut être métallique, moulée ou usinée.

De même le support de tourillon 11 et ses moyens d'association 13 sont une pièce monobloc moulée ou usinée.

La structure de siège d'appareil de transport aérien selon l'invention comporte outre une assise, un dossier inclinable, et au moins un dispositif d'articulation tels que décrits ci-dessus, un organe de commande et de maintien en position du dossier 29, une biellette d'actionnement 28 appropriée, et un dispositif 34 de tablette passager 26 escamotable destiné à être utilisé par le passager assis dans le prolongement sur le siège placé derrière ladite structure.

L'organe de commande et de maintien en position du dossier est associé rigidement à l'assise et coopère via la biellette 28 avec le dossier 2 pour permettre le réglage de la position du dossier et son maintien en position. La biellette 28 est associée rigidement au dossier en rotation autour de l'axe de basculement.

Le dispositif de tablette passager 34 comporte en outre une pièce mécanique 24 supportant la tablette passager 26 et mobile en rotation autour de l'axe de basculement 4.

Selon le mode préféré de réalisation de l'invention, l'élément de tourillon 10 comporte un dispositif 23 de maintien, de guidage et de blocage en position fonctionnelle de la pièce mécanique 24 en rotation autour de l'axe de basculement 4.

Cette pièce mécanique 24 est en outre montée de façon amovible sans outils sur l'élément de tourillon.

Le dispositif 23 de maintien, de guidage et de blocage comprend deux ailes radiales transversales 30 solidaires de l'élément de tourillon 10 définissant le guidage de la pièce mécanique 24. Le dispositif de maintien, de guidage et de blocage comprend en outre une âme radiale longitudinale 31 reliant les deux ailes 30 et définissant avec elles un siège 32 sur lequel vient en butée la pièce mécanique 24 en position fonctionnelle. Les ailes radiales transversales 30 et l'âme radiale longitudinale 31 peuvent avantageusement être évidées afin de rendre l'élément de tourillon plus léger.

Selon le mode préféré de réalisation de l'invention, l'élément de tourillon 10 comporte en outre un dispositif de solidarisation avec le dossier de la biellette d'actionnement 28 de l'organe de commande de basculement et de maintien en position du dossier 29. En effet, la biellette d'actionnement 28 est montée libre en rotation autour de l'élément de tourillon 10 et est fixé sur l'aile radiale 30 la plus proche de l'assise 3, de telle sorte que la biellette est solidaire du dossier en rotation autour de l'axe de basculement 4. De ce fait, l'association de l'organe de commande sur l'assise ne nécessite plus de raidisseurs supplémentaires rapportés.

Préférentiellement le moyen de fixation de la biellette sur l'aile est une tige filetée 27a solidaire et rapportée sur l'aile et un boulon 27b.

Dans le mode préféré de réalisation de l'invention, l'élément de tourillon 10 comporte une première saillie tubulaire 35 dans le prolongement de l'axe de basculement 4 côté dossier 2 coopérant avec un premier orifice 36 réalisé dans l'extrémité libre 9 du chant latéral 6 du dossier 2, et une deuxième saillie 37 décalée radialement par rapport à la première saillie 35 coopérant avec un deuxième orifice 38, décalée de la même façon sur l'extrémité libre 9 du chant latéral 6 du dossier 2, de telle manière que l'élément de tourillon 10 est solidaire du dossier 2 en rotation autour de l'axe de basculement 4.

Dans le mode de réalisation représenté et selon des caractéristique additionnelles de l'invention, le plan radial des méplats 14 est horizontal, et la structure de siège comporte quatre positions à savoir : la position d'association ou position de montage-démontage dans laquelle le dossier est rabattu vers l'assise de telle sorte que le plan du dossier et l'horizontale forment un angle compris dans une fourchette de 25 à 35°, préférentiellement 32,5° ; une position de "break-over", correspondant à une position de service en cas d'accident, le dossier étant rabattu vers l'assise et formant un angle d'environ 70° avec l'horizontale ; la position assise, position de service dans laquelle le passager est assis ; et la position allongée, position de service dans laquelle le passager est légèrement allongé.

Selon le mode préféré de réalisation de l'invention, les ailes radiales transversales 30, du dispositif de maintien 23 s'étendent sur une amplitude angulaire comprise entre 40 et 60°, préférentiellement 50° à partir du plan du dossier 2 vers l'arrière du dossier 2.

## Revendications

1. Dispositif d'articulation entre un dossier (2) et une assise (3) de siège d'appareil de transport en commun -notamment d'avion de ligne- destiné à permettre le basculement du dossier (2) par rapport à l'assise (3) autour d'un axe de basculement (4), le dossier (2) ayant une forme générale en "U" dont l'âme forme le haut du dossier (2) et les ailes forment les chants latéraux (6) du dossier (2), l'assise (3) ayant une partie arrière (7) comportant deux extrémités libres arrières (8), l'axe de basculement étant horizontal et passant par les extrémités libres arrières (8) de l'assise (3) et les extrémités libres (9) des chants latéraux (6) du dossier (2), caractérisé en ce qu'il comporte au moins à une extrémité libre (9) du dossier (2), un élément de tourillon (10) associé rigidement et solidaire du dossier (2), en saillie à l'extérieur du dossier (2) et dans le prolongement de l'axe de basculement ; sur l'extrémité libre arrière (8) de l'assise (3) en regard de l'élément de tourillon (10) un support de tourillon (11) associé rigidement et solidaire de la partie arrière (7) de l'assise (3), en saillie à l'intérieur de l'assise (3) et dans le prolongement de l'axe de basculement ; l'élément de tourillon (10) et le support de tourillon (11) ayant des moyens d'association (12, 13) respectifs réalisant une association amovible et sécurisée et permettant la rotation de l'élément de tourillon (10) autour de l'axe de basculement (4), l'élément de tourillon (10) s'étendant axialement sur une partie substantielle du segment d'axe de basculement compris entre l'extrémité libre (9) du dossier (2) et l'extrémité libre arrière (8) de l'assise (3), les moyens d'association (13) du support de tourillon (11) ou de l'élément de tourillon (10) comprenant un méplat (14) dans un plan radial à l'axe de basculement (4), tandis que les moyens d'association (12) de l'élément de tourillon (10) ou du support de tourillon (11) comprennent un élément tubulaire (15) avec une fente longitudinale (17) étendue suivant une génératrice de même axe que l'axe de basculement (4).

2. Dispositif selon la revendication 1, caractérisé en ce qu'il présente une position d'association dans laquelle l'élément de tourillon (10) et le support de tourillon (11) sont associés sans outil et au moins une position de service dans laquelle l'association de l'élément de tourillon (10) et du support de tourillon (11) est sécurisée.

3. Dispositif selon la revendication 1 ou 2, caractérisé en ce que chaque extrémité libre (9) du dossier (2) présente un élément de tourillon (10) et chaque extrémité libre arrière (8) de l'assise (3) présente un support de tourillon (11).

4. Dispositif selon la revendication 2 ou 3, caractérisé en ce que dans la position d'association, l'élément de tourillon (10) est libre en translation par rapport au support de tourillon (11) dans une direction d'association radiale à l'axe de basculement (4) et en ce que dans la position de service sécurisée l'élément de tourillon (10) est bloqué dans toutes les directions radiales à l'axe de basculement (4).

5. Dispositif selon l'une quelconque des revendications 2 à 4, caractérisé en ce que le méplat (14) des moyens d'association (13) du support de tourillon (11) ou de l'élément de tourillon (10) s'étend du côté opposé à l'assise (3) ou au dossier (2) dans un plan radial à l'axe de basculement (4), de médiane confondue avec l'axe de basculement (4), et l'élément tubulaire (15) des moyens d'association (12) de l'élément de tourillon (10) ou du support de tourillon (11) comprend une paroi interne (16) cylindrique de même axe que l'axe de basculement (4), avec du côté opposé au dossier (2) ou à l'assise (3), la fente longitudinale (17) étendue suivant une génératrice de la paroi interne (16) cylindrique, le méplat (14) ayant une longueur radiale sensiblement égale au diamètre intérieur de l'élément tubulaire (15) et une épaisseur inférieure à l'épaisseur de la fente longitudinale (17), de sorte que dans la position d'association, le plan radial virtuel passant par la fente est confondu avec le plan radial du méplat (14), le méplat (14) étant disposé à l'intérieur de l'élément tubulaire (15) et en regard de la fente longitudinale (17), et dans la position de service sécurisée le plan radial virtuel est différent du plan radial du méplat (14), les bords distaux (18) du méplat (14) coopérant avec la paroi interne (16) de l'élément tubulaire (15).

6. Dispositif selon la revendication 5, caractérisé en ce que l'extrémité de l'élément tubulaire (15) est une base fermée (19) présentant une fente radiale (20) venant dans le prolongement de la fente longitudinale (17) permettant le passage d'un élément de tige (21) cylindrique de même axe que l'axe de basculement (4) intercalé entre l'assise (3) ou le dossier (2) et le méplat (14) de telle manière que la face interne (22) de la base (19) coopère avec le méplat (14) pour bloquer en translation suivant l'axe de basculement (4) le dossier (2) par rapport à l'assise (3) au moins dans le sens tendant à écarter le dossier (2) de l'assise (3).

7. Dispositif selon l'une quelconque des revendications 1 à 6, caractérisé en ce que l'élément de tourillon (10) et ses moyens d'association (12) sont une pièce monobloc.

8. Dispositif selon l'une quelconque des revendications 1 à 7, caractérisé en ce que le support de tourillon (11) et ses moyens d'association (13) sont une pièce monobloc.

9. Dispositif selon l'une quelconque des revendications 1 à 8, caractérisé en ce que l'élément de tourillon (10) comporte un dispositif (27) de maintien, de guidage et de blocage en position fonctionnelle d'une pièce mécanique (24) en rotation autour de l'axe de basculement (4) et supportant une tablette passager (26).

10. Dispositif selon l'une quelconque des revendications 1 à 9, caractérisé en ce que l'élément de tourillon (10) comporte un dispositif de solidarisation (27) avec le dossier (2) en rotation autour de l'axe de basculement (4) d'une biellette (28) d'actionnement d'un organe (29) de commande du basculement et de maintien en position du dossier (2) par rapport à l'assise (3).

11. Dispositif selon la revendication 9 ou 10, caractérisé en ce que le dispositif (27) de maintien, de guidage et de blocage comprend deux ailes radiales (30) transversales solidaires de l'élément de tourillon (10) définissant le guidage de la pièce mécanique (24), et une âme (31) radiale longitudinale reliant les deux ailes (30) et définissant avec elles un siège (32) sur lequel vient en butée la pièce mécanique (24) en position fonctionnelle.

12. Dispositif selon la revendication 11, caractérisé en ce que la biellette (28) d'actionnement est montée libre en rotation sur l'élément de tourillon (10) et est fixée sur l'aile (30) la plus proche de l'assise (3) de telle sorte que la biellette (28) est solidaire du dossier (2) en rotation autour de l'axe de basculement (4).

13. Dispositif selon la revendication 11 ou 12, caractérisé en ce que l'élément de tourillon (10) comporte une première saillie (35) dans le prolongement de l'axe de basculement (4) côté dossier (2), coopérant avec un premier orifice (36) réalisé dans l'extrémité libre (9) du chant latéral (6) du dossier (2), et une deuxième saillie (35), décalée radialement par rapport à la première saillie (35), disposée sur l'aile (30) la plus proche du dossier (2), coopérant avec un deuxième orifice (38) décalé de la même façon sur l'extrémité libre (9) du chant latéral (6) du dossier (2), de manière que l'élément de tourillon (10) est solidaire du dossier (2) en rotation autour de l'axe de basculement (4).

14. Structure de siège d'appareil de transport aérien en commun -notamment d'avion de ligne- caractérisé en ce qu'elle comporte au moins un dispositif d'articulation (1) selon l'une des revendications 1 à 13 du dossier (2) sur l'assise (3).

15. Structure de siège d'appareil de transport aérien en commun -notamment d'avion de ligne- constituée d'un piétement, d'une assise (3), et d'un dossier (2) inclinable autour d'un axe de basculement (4); le dossier (2) ayant une forme générale en "U" dont l'âme forme le haut du dossier (2) et les ailes forment les chants latéraux (6) du dossier (2), l'assise (3) ayant une partie arrière (7) comportant deux extrémités libres arrières (8), chaque extrémité libre (9) des chants latéraux (6) du dossier (2) étant articulée à une extrémité libre arrière (8) de l'assise (3) par des moyens d'articulation de façon à pouvoir pivoter autour de l'axe de basculement (4), la structure comportant en outre un organe (29) de commande et de maintien en position du dossier (2), cet organe (29) étant associé rigidement à l'assise (3) et coopérant via une biellette (28) appropriée avec le dossier (2) pour permettre le réglage de la position du dossier (2) et son maintien en position, et un dispositif (34) de tablette passager (26) escamotable destiné à être utilisé par le passager assis dans le prolongement et derrière ladite structure, caractérisée en ce que les moyens d'articulation sont des dispositifs d'articulation selon l'une quelconque des revendications 9 à 13.

16. Structure de siège selon la revendication 15, caractérisée en ce que ce sont les supports de tourillon des dispositifs d'articulation qui comprennent les méplats (14).

17. Structure de siège selon la revendication 16, caractérisée en ce que les plans radiaux des méplats (14) sont horizontaux.

18. Structure de siège selon l'une quelconque des revendications 15 à 17, caractérisée en ce que dans la position d'association le dossier (2) est rabattu vers l'assise (3) et l'angle entre le plan du dossier (2) et l'horizontale est compris dans une fourchette de 25° à 35°, préférentiellement 32,5°.

19. Structure de siège selon l'une quelconque des revendications 15 à 18, caractérisée en ce que les ailes radiales (30) transversales du dispositif (27) de maintien, et de guidage, s'étendent sur une amplitude angulaire comprise entre 40° et 60°, préférentiellement 50° à partir du plan du dossier (2), vers l'arrière du dossier (2).

## Claims

1. A hinge device between a seat squab frame or seatback (2) and a seat cushion frame or seat bottom (3) of public transport vehicles - especially airliners - adapted to allow the seat squab frame (2) to tilt relative to the seat cushion frame (3) about a tilt axis (4), said seat squab frame (2) being generally U-shaped with the web forming the top of the seat squab frame (2) and the sides forming the lateral edges (6) of the seat squab frame (2), said seat cushion frame (3) having a rear part (7) including two rear free ends (8), said tilt axis being horizontal and passing through the rear free ends (8) of the seat cushion frame (3) and the free ends (9) of the lateral edges (6) of the seat squab frame (2), the hinge device being characterized in that it includes at at least one free end (9) of the seat squab frame (2) a journal member (10) rigidly coupled with and fastened to the seat squab frame (2), projecting out of the seat squab frame (2) and in line with the tilt axis ; at the rear free end (8) of the seat cushion frame (3) facing the journal member (10) a journal support (11) rigidly coupled with and fastened tot he rear part (7) of the seat cushion frame (3) and in line with the tilt axis ; the journal member (10) and the journal support (11) having respective coupling means (12.13) providing a removable and secured and enabling rotation of the journal member (10) about the tilt axis (4), the journal member (10) extending axially over a substantial part of the tilt axis segment between the free end (9) of the seat squab frame (2) and the rear free end (8) of the seat cushion frame (3), the coupling means (13) of the journal support (11) or the journal member (10) comprising a flat (14) in a plane radial to the tilt axis (4), while the coupling means (12) of the journal member (10) or the journal support (11) comprise a tubular member (15) with a longitudinal slot (17) extending along a generatrix which axis is the same as the tilt axis (4).

2. A device according to claim 1 characterized in that it has a coupling position in which the journal member (10) and the journal support (11) are coupled without the use of tools and at least one service position in which the coupling of the journal member (10) with the journal support (11) is secured.

3. A device according to claim 1 or claim 2 characterized in that each free end (9) of the seat squab frame (2) has a journal member (10) and each rear free end (8) of the seat cushion frame (3) has a journal support (11)

4. A device according to claim 2 or claim 3 characterized in that in the coupling position, the journal member (10) is free to move in translation relative to the journal support (11) in a coupling direction radial to the tilt axis (4) and in that in the secured service position the journal member (10) is immobilized in all directions radial to the tilt axis (4).

5. A device according to any one of claims 2 to 4 characterized in that the flat (14) of the coupling means (13) of the journal support (11) or of the journal member (10) extends from the side opposite the seat cushion frame (3) or the seat squab frame (2) in a plane radial to the tilt axis (4), with its median line coincident with the tilt axis (4) and the tubular member (15) of the coupling means (12) of the journal member (10) or of the journal support (11) comprises a cylindrical inside wall (16) with same axis as the tilt axis (4) having on the side opposite the seat squab frame (2) or the seat cushion frame (3) the longitudinal slot (17) extending along a generatrix of the cylindrical internal wall (16), the flat (14) having a radial length substantially equal to the inside diameter of the tubular member (15) and a thickness less than the thickness of the longitudinal slot (17) so that in the coupling position the virtual radial plane through the slot is coincident with the radial plane of the flat (14), the falt (14) being inside the tubular member (15) and facing the longitudinal slot (17), and in the secured service position the virtual radial plane is different from the radial plane of the flat (14), the distal edges (18) of the flat (14) cooperating with the inside wall (16) of the tubular member (15).

6. A device according to claim 5 characterized in that the end of the tubular member (15) is a closed base (19) having a radial slot (20) in line with the longitudinal slot (17) and enabling the passage of a cylindrical rod member (21) which axis is the same as the tilt axis (4) and disposed between the seat cushion frame (3) or the seat squab frame (2) and the flat (14) so that the inside surface (22) of the base (19) cooperates with the flat (14) to immobilize movement in translation along the tilt axis (4) of the seat squab frame (2) relative to the seat cushion frame (3) at least in the direction tending to move the seat squab frame (2) away from the seat cushion frame (3).

7. A device according to any one of claims 1 to 6 characterized in that the journal member (10) and its coupling means (12) are in one piece.

8. A device according to any one of claims 1 to 7 characterized in that the journal support (11) and its coupling means (13) are in one piece.

9. A device according to any one of claims 1 to 8 characterized in that the journal member (10) includes a device (27) for holding, guiding and immobilizing in its service position a mechanical member (24) rotatable about the tilt axis (4) and supporting a passenger tray (26).

10. A device according to any one of claims 1 to 9 characterized in that the journal member (10) includes a fastening device (27) with the seat squab frame (2) rotating about the tilt axis (4) of a link (28) for operating a member (29) for controlling the tilt of the seat squab frame (2) and holding it in position relative to the seat cushion frame (3).

11. A device according to claim 9 or claim 10 characterized in that the holding, guiding and immobilizing device (27) comprises two transverse radial flanges (30) fastened to the journal member (10) forming the guiding of the mechanical member (24) and a longitudinal radial web (31) joining the two flanges (30) and defining with them a seating (32) against which the mechanical member (24) abuts in the service position.

12. A device according to claim 11 characterized in that the operating link (28) is free to rotate on the journal member (10) and is fixed to the nearest flange (30) to the seat cushion frame (3) so that the link (28) is fastened to the seat squab frame (2) rotating about the tilt axis (4).

13. A device according to claim 11 or claim 12 characterized in that the journal member (10) includes a first projection (35) in line with the tilt axis (4) on the seat squab frame (2) side, cooperating with a first orifice (36) formed in the free end (9) of the lateral edge (6) of the seat squab frame (2) and a second projection (37) radially offset from the first projection (35) on the nearest flange (30) to the seat squab frame (2) cooperating with a second orifice (38) similarly offset on the free end (9) of the lateral edge (6) of the seat squab frame (2) so that the journal member (10) is fastened to the seat squab frame (2) rotating about the tilt axis (4).

14. Seat structure for public air transport vehicles - especially airliners - characterized in that it includes at least one hinge device (1) according to any one of claims 1 to 13 for hinging the seat squab frame (2) to the seat cushion frame (3).

15. Seat structure for public air transport vehicles - especially airliners - comprising a plinth, a seat cushion frame (3) and a seat squab frame (2) which can be tilted about a tilt axis (4), the seat squab frame (2) being generally U-shaped with a web forming the top of the seat squab frame (2) and sides forming the lateral edges (6) of the seat squab frame (2), the seat cushion frame (3) having a rear part (7) including two rear free ends (8), each free end (9) of the lateral edges (6) of the seat squab frame (2) being hinged to one rear free end (8) of the seat cushion frame (3) by hinge means so that it can pivot about the tilt axis (4), the structure further comprising a member (29) for controlling and holding the seat squab frame (2) in position, this member (29) being rigidly coupled with the seat cushion frame (3) and cooperating via an appropriate link (28) with the seat squab frame (2) to enable the seat squab frame (2) to be adjusted and held in position and a device (34) for a retractable passenger tray (26) adapted to be used by a passenger seated in line with and behind said structure, characterized in that the hinge means are hinge devices according to any one of claims 9 to 13.

16. Seat structure according to claim 15 characterized in that the journal supports of the hinge devices incorporate the flats (14).

17. Seat structure according to claim 16 characterized in that the radial planes of the flats (14) are horizontal.

18. Seat structure according to any one of claims 15 to 17 characterized in that in the coupling position the seat squab frame (2) is folded towards the seat squab frame (3) and the angle between the plane of the seat squab frame (2) and the horizontal is between 25° and 35° and preferably equal to 32.5°.

19. Seat structure according to any of claims 15 to 18 characterized in that the transverse radial flanges (30) of the holding and guiding device (27) subtend an angle of between 40° and 60° and preferably equal to 50° from the plane of the seat squab frame (2) rearwardly of the seat squab frame (2).

## Patentansprüche

1. Schwenkvorrichtung zwischen einer Rückenlehne (2) und einer Sitzfläche (3) eines Sitzes eines öffentlichen Verkehrsmittels - insbesondere eines Verkehrsflugzeugs -, die vorgesehen ist um das Verschwenken der Rückenlehne (2) gegenüber der Sitzfläche (3) um eine Schwenkachse (4) zu ermöglichen, wobei die Rückenlehne (2) weitgehend in Form eines "U" ausgebildet ist, dessen Zwischenteil die Oberseite der Rückenlehne (2) und dessen Schenkel die Seitenkanten (6) der Rückenlehne (2) bilden, während die Sitzfläche (3) ein Hinterteil (7) mit zwei freien hinteren Enden (8) aufweist, die Schwenkachse waagerecht ausgerichtet ist und durch die zwei freien hinteren Enden (8) der Sitzfläche (3) sowie die freien Enden (9) der Seitenkanten (6) der Rückenlehne (2) verläuft, dadurch gekennzeichnet, daß sie an mindestens einem freien Ende (9) der Rückenlehne (2) ein starr und fest mit der Rückenlehne (2) zugeordnetes und in der Verlängerung der Schwenkachse über die Rückenlehne (2) hinausragendes Zapfenteil (10) sowie ein am freien hinteren Ende (8) der Sitzfläche (3) und dem Zapfenteil (10) gegenüberliegendes, starr und fest mit dem Hinterteil (7) der Sitzfläche (3) zugeordnetes und in der Verlängerung der Schwenkachse (4) innerhalb der Sitzfläche (3) hineinragendes Zapfenlager (11) aufweist, wobei das Zapfenteil (10) und das Zapfenlager (11) jeweils Zuordnungsmittel (12, 13) besitzen, mit denen eine lösbare und gesicherte Zuordnung hergestellt, jedoch auch das Zapfenteil (10) um die Schwenkachse (4) geschwenkt werden kann und das Zapfenteil (10) sich in Achsrichtung über einen wesentlichen Teil des Schwenkachsenabschnitts zwischen dem freien Ende (9) der Rückenlehne (2) und dem freien hinteren Ende (8) der Sitzfläche (3) erstreckt, wobei die Zuordnungsmittel (13) am Zapfenlager (11) oder am Zapfenteil (10) eine in einer radiale zur Schwenkachse (4) Eben liegende Abflachung (14) besitzen, während die Zuordnungsmittel (12) am Zapfenteil (10) oder am Zapfenlager (11) ein Rohrteil (15) mit einer Längsspalte (17), die sich längs einer Mantellinie erstreckt, deren Achse parallel zur Schwenkachse verläuft, besitzen.

2. Schwenkvorrichtung nach Patentanspruch 1, dadurch gekennzeichnet, daß sie eine Zuordnungsstellung besitzt, in der das Zapfenteil (10) und das Zapfenlager (11) ohne Werkzeug zugeordnet sind, sowie mindestens eine Servicestellung, in der die Zuordnung zwischen Zapfenteil (10) und Zapfenlager (11) gesichert ist.

3. Schwenkvorrichtung nach Patentanspruch 1 oder 2, dadurch gekennzeichnet, daß jedes freie Ende (9) der Rückenlehne (2) ein Zapfenteil (10) und jedes freie Ende (8) der Sitzfläche (3) ein Zapfenlager (11) aufweist.

4. Schwenkvorrichtung nach Patentanspruch 2 oder 3, dadurch gekennzeichnet, daß in der Zuordnungsstellung das Zapfenteil (10) gegenüber dem Zapfenlager (11) in einer radialen Richtung in Bezug auf die Schwenkachse (4) frei verschieblich, in gesicherter Bedienungsstellung jedoch in allen in Bezug auf die Schwenkachse (4) radialen Richtungen blockiert ist.

5. Schwenkvorrichtung nach einem der Patentansprüche 2 bis 4, dadurch gekennzeichnet, daß sich die Abflachung (14) der Zuordnungsmittel (13) des Zapfenlagers (11) oder des Zapfenteils (10) auf der der Sitzfläche (3) oder der Rückenlehne (2) gegenüberliegenden Seite in einer zur Schwenkachse (4) radiale Ebene erstreckt, sodaß seine Mittellinie mit der der Schwenkachse (4) zusammenfällt und das Rohrteil (15) der Zuordnumgsmittel (12) des Zapfenteils (10) oder des Zapfenlagers (11) eine zylindrische Innenwand (16) besitzt, deren Mittelachse mit der der Schwenkachse (4) zusammenfällt, wobei die auf der der Sitzfläche (3) oder der Rückenlehne (2) gegenüberliegenden Seite befindliche Längsspalte (17) der Mantellinie der zylindrischen Innenwand (16) entlang verläuft, die Länge der Abflachung (14) in radialer Richtung weitgehend dem Innendurchmesser des Rohrteils (15) entspricht und die Stärke der Abflachung (14) geringer als die Öffnungsweite der Längsspalte (17) ist, sodaß in der Zuordnungsstellung die virtuelle radiale Ebene durch die Längsspalte (17) mit der radialen Ebene der Abflachung (14) zusammenfällt, wobei sich diese Abflachung (14) auf die Längsspalte (17) ausgerichtet in dem Rohrteil (15) befindet, während in der gesicherten Bedienungsstellung die virtuelle radiale Ebene der Längsspalte (17) von der radialen Ebene der Abflachung (14) unterschiedlich ist, wobei die entfernte Kanten (18) mit der Innenwand (16) des Rohrteils (15) zusammenwirken.

6. Schwenkvorrichtung nach Patentanspruch 5, dadurch gekennzeichnet, daß das Ende des Rohrteils (15) eine geschlossenes Grundteil (19) ist, in der eine radiale Spalte (20) in Verlängerung der Längsspalte (17) angebracht ist, wobei diese radiale Spalte den Durchgang eines zylindrischen Stabteil (21), dessen Achse mit der der Schwenkachse (4) zusammenfällt und das sich zwischen der Sitzfläche (3) oder der Rückenlehne (2) und dem Flachteil (14) befindet, ermöglicht, so daß die Innenseite (22) des Grundteils (19) derart mit der Abflachung (14) zusammenwirkt, daß die Rückenlehne (2) in ihrer Verlagerungsrichtung auf der Schwenkachse (4) gegenüber der Sitzfläche (3) zumindest in der Richtung blockiert wird, in der die Rückenlehne (2) von der Sitzfläche (3) entfernt wird.

7. Schwenkvorrichtung nach einem der Patentansprüche 1 bis 6, dadurch gekennzeichnet, daß das Zapfenteil (10) und dessen Zuordnungsmittel (12) einteilig hergestellt sind.

8. Schwenkvorrichtung nach einem der Patentansprüche 1 bis 7, dadurch gekennzeichnet, daß das Zapfenlager (11) und dessen Zuordnungsmittel (13) einteilig hergestellt sind.

9. Schwenkvorrichtung nach einem der Patentansprüche 1 bis 8, dadurch gekennzeichnet, daß das Zapfenteil (10) eine Vorrichtung (27) zum Festhalten, Führen und um die Schwenkachse (4) drehungsfesten Blockieren eines mechanischen Teils (24) in der Funktionsstellung besitzt, wobei das mechanische Teil (24) einen Klapptisch für Passagiere (26) trägt.

10. Schwenkvorrichtung nach einem der Patentansprüche 1 bis 9, dadurch gekennzeichnet, daß das Zapfenteil (10) eine Vorrichtung zum um die Schwenkachse (4) drehfesten Verbinden eines Betätigungsschwingarms (28) für ein Organ zur Schwenk - und Festhalten - Steuerung der Rückenlehne (2) gegenüber der Sitzfläche (3) mit der Rückenlehne (2) aufweist.

11. Schwenkvorrichtung nach Patentanspruch 9 oder 10, dadurch gekennzeichnet, daß die Vorrichtung zum Festhalten, Führen und Blockieren (27) zwei radiale, quergerichtete, fest mit dem Zapfenteil (10) verbundene Schenkel (30), mit denen die Führung des mechanischen Teils (24) gebildet wird, sowie eine radiale, längsgerichtete Querverbindung (31) zwischen den beiden Schenkeln (30) besitzt, mit denen sie ein Auflager (32) bildet, auf dem das mechanische Teil (24) in Funktionsstellung aufliegt.

12. Schwenkvorrichtung nach Patentanspruch 11, dadurch gekennzeichnet, daß der Schwenkarm (28) frei drehbahr auf dem Zapfenteil (10) angeordnet und so an dem der Sitzfläche (3) am nächsten liegenden Schenkel (30) befestigt ist, daß der Swenkarm (28) mit der Rückenlehne (2) um die Schwenkachse (4) drehfest verbunden ist.

13. Schwenkvorrichtung nach Patentanspruch 11 oder 12, dadurch gekennzeichnet, daß das Zapfenteil (10) einen ersten Ansatz (35) in der Verlängerung der Schwenkachse (4) in Richtung Rückenlehne (2) besitzt, der mit einer ersten Öffnung (36) im freien Ende (9) der Seitenkante (6) der Rückenlehne (2) zusammenwirkt, sowie einen zweiten, radial gegenüber dem ersten Ansatz (35) versetzten, auf dem der Rückenlehne (2) am nächsten gelegenen Schenkel (30) angeordneten Ansatz (35), der mit einer zweiten, gleichermaßen versetzten Öffnung (38) im freien Ende (9) der Seitenkante (6) der Rückenlehne (2) zusammenwirkt, sodaß das Zapfenteil (10) mit der Rückenlehne (2) um die Schwenkachse (4) drehfest verbunden ist.

14. Struktur für den Sitz eines öffentlichen Luftverkehrsmittels, insbesondere eines Verkehrsflugzeugs, dadurch gekennzeichnet, daß die Struktur mindestens eine Schwenkvorrichtung (1) zwischen Rückenlehne (2) und Sitzfläche (3) nach einem der Patentansprüche 1 bis 13 besitzt.

15. Struktur für den Sitz eines öffentlichen Luftverkehrsmittels, insbesondere eines Verkehrsflugzeugs, bestehend aus einem Gestell, einer Sitzfläche (3) und einer um eine Schwenkachse (4) schwenkbaren Rückenlehne (2), wobei die Rückenlehne (2) weitgehend in Form eines "U" ausgebildet ist, dessen Zwischenteil die Oberseite der Rückenlehne (2) und dessen Schenkel die Seitenkanten (6) der Rückenlehne (2) bilden, während die Sitzfläche (3) ein Hinterteil (7) mit zwei freien hinteren Enden (8) aufweist, während jedes freie Ende (9) der Seitenkanten (6) der Rückenlehne (2) durch entsprechende Schwenkmittel gegenüber einem freien hinteren Ende (8) der Sitzfläche (3) so angelenkt sind, daß sie um die Schwenkachse (4) schwenken können, und die Struktur weiterhin ein Organ (29) zur Steuerung und Festhaltung der Rückenlehne (2) besitzt, wobei dieses Organ (29) starr der Sitzfläche (3) zugeordnet ist und über einen entsprechenden Schwenkarm (28) mit der Rückenlehne (2) zusammenwirkt, um dessen Verstellen und Festhalten zu ermöglichen, sowie eine Vorrichtung (34) mit Klapptisch (36) für den in der Verlängerung hinter der Struktur sitzenden Passagier, dadurch gekennzeichnet, daß die Schwenkmittel Schwenkvorrichtungen nach einem der Patentansprüche 9 bis 13 sind.

16. Sitzstruktur nach Patentanspruch 15, dadurch gekennzeichnet, daß die Zapfenhalterungen der Schwenkmittel die Abflachungen (14) besitzen.

17. Sitzstruktur nach Patentanspruch 16, dadurch gekennzeichnet, daß die radialen Ebenen der Abflachungen (14) waagerecht sind.

18. Sitzstruktur nach einem der Patentansprüche 15 bis 17, dadurch gekennzeichnet, daß die Rückenlehne (2) in der Zuordnungsstellung zur Sitzfläche (3) geklappt ist und der Winkel zwischen der Neigungsebene der Rückenlehne (2) und der Horizontalen zwischen 25° und 35° und vorzugsweise 32,5° beträgt.

19. Sitzstruktur nach einem der Patentansprüche 15 bis 18, dadurch gekennzeichnet, daß die radialen, quergerichteten Schenkel (30) der Vorrichtung (27) zum Festhalten und Führen einen Winkel von 40° bis 60°, vorzugsweise von 50° von der Neigungsebene der Rückenlehne (2) zur Rückseite der Rückenlehne (2) hin bilden.
